# EUROPEAN PATENT APPLICATION

(11) **EP 1 065 623 A2**
(43) Date of publication of application: **03.01.2001**
(21) Application number: 00113581.3
(22) Date of filing: 27.06.2000
(51) Int. Cl.: G06K 19/06

(54) **Mircowave readable barcode**

(30) Priority: 29.06.1999 US 342396
(71) Applicant: Xerox Corporation, Rochester, New York 14644 (US)
(72) Inventor: Marchand, J. F. Philippe, Rochester, New York 14607 (US)
(74) Representative: Grünecker, Kinkeldey, Stockmair & Schwanhäusser Anwaltssozietät

(57) **Abstract**

Microwave readable barcodes and microwave barcoding systems. Microwave readable barcodes have conductive bars that selectively resonate with incoming microwave signals. Conductive bars can be made from conductive ink or from a conductive foil. Barcode information can be encoded using conductive bars of different lengths, different angles, or different positions. Microwave readable barcode systems include a barcode made form conductive bars, a transmitter that radiates a microwave signal onto the barcode, and a sensor that senses the effect of the conductive bars on the microwave signal. Sensors can sense the attenuation or the non-attenuation of the microwave signal by the conductive bars, and/or the scattering or the non-scattering of the microwave signal by those bars. Barcode systems can use multiple microwave signals that differ in one or more respects, such as polarization or wavelength.

## Description

### FIELD OF THE INVENTION

This invention relates to barcodes. In particular, it relates to barcodes that can be sensed using microwaves.

### BACKGROUND OF THE INVENTION

Barcodes are well known and frequently used symbols for identifying products, parts, prices, serial numbers, and many other bits of data. Over the years many different barcodes have been used, including the UPC codes found in grocery stores and the Code 39 barcodes used for many non-grocery items. However, basically the different barcodes are simply alternative ways of encoding information. For example, a narrow bar or space might represent a 0 while a wide bar or space might represent a 1, or a long bar might represent a 0 while a short bar might represent a 1.

Barcodes can differ on how they are sensed. Light, usually in the form of a scanning laser beam, or magnetic energy are commonly used to sense barcodes. A problem with light operated barcodes is that the barcode can become obscured, either with contaminates such as dirt or smudged ink, or by an opaque obstruction, such as a barcode-containing document being inside an envelope or under another document. Magnetic barcodes generally require careful, close placement of a magnetic barcode reader relative to the barcode itself. This can be very difficult to do.

Therefore, a new type of barcode that is machine readable would be beneficial. Even more beneficial would be a barcode that is readable through dirt and other opaque materials and that does not require accurate placement of the barcode reader relative to the barcode.

In a further embodiment said first polarized microwave signal and said second polarized microwave signal have different polarizations.

### SUMMARY OF THE INVENTION

The principles of the present invention provide for microwave readable barcodes and for barcode systems that use microwaves.

A barcode according to the principles of the present invention is comprised of a plurality of conductive bars that selectively resonate with an incoming microwave signal. Such conductive bars may be made in numerous ways, such as being printed with conductive ink, cut from a wire, or stamped from a conductive foil. The stored information can be encoded using conductive bars of one length to represent one packet of information and conductive bars of a different length to represent another packet of information. Several different lengths can be used to encode information. Another way of encoding information is to use conductive bars at one angle to represent one packet of barcode information and conductive bars at another angle to represent another packet of barcode information. Yet another way of encoding information is to use conductive bars distributed along one vertical position to represent one packet of barcode information and conductive bars distributed along another vertical position to represent another packet of barcode information. It is also possible to represent one packet of barcode information by having a conductive bar and another packet of information by not having a conductive bar.

In a further embodiment the barcode represents one packet of information using conductive bars at one angle and another packet of information using conductive bars at a different angle.

In a further embodiment said conductive bars at said one angle are resonant with microwave energy at a first polarization.

In a further embodiment said conductive bars at said different angle are resonant with microwave energy at a second polarization that is different from said first polarization.

A barcode system according to the principles of the present invention includes a barcode comprised of a plurality of conductive bars that resonate with a microwave signal. A transmitter then radiates a microwave signal onto the barcode. A sensor then senses the effect of the conductive bars on the microwave signal and, using that effect, the sensor identifies a packet of the barcode information that is represented by the conductive bars. Sensors can sense the attenuation or the non-attenuation of the microwave signal by the conductive bars. Alternatively, or in addition, sensors can sense the scattering or the non-scattering of the microwave signal. Furthermore, barcode systems can also use two or more different microwave signals. Microwave signals can differ in one or more respects, such as polarization or wavelength.

In a further embodiment said sensed effect is a lack of attenuation of said radiated polarized microwave signal.

In a further embodiment said sensed effect is scattering of said radiated polarized microwave signal.

In a further embodiment said sensed effect is a lack of scattering of said radiated polarized microwave signal.

In a further embodiment said barcode represents one packet of information using conductive bars of one length.

In a further embodiment said barcode represents one packet of information using conductive bars at one angle.

### BRIEF DESCRIPTION OF THE DRAWINGS

Other aspects of the present invention will become apparent as the following description proceeds and upon reference to:
Figure 1 schematically illustrates a microwave barcode system;
Figure 2 illustrates one class of microwave readable elements;
Figure 3 illustrates another class of microwave readable elements;
Figure 4 illustrates still another class of microwave readable elements; and
Figure 5 illustrates a mixed system of microwave readable elements.

### DETAILED DESCRIPTION OF A PREFERRED EMBODIMENT OF THE INVENTION

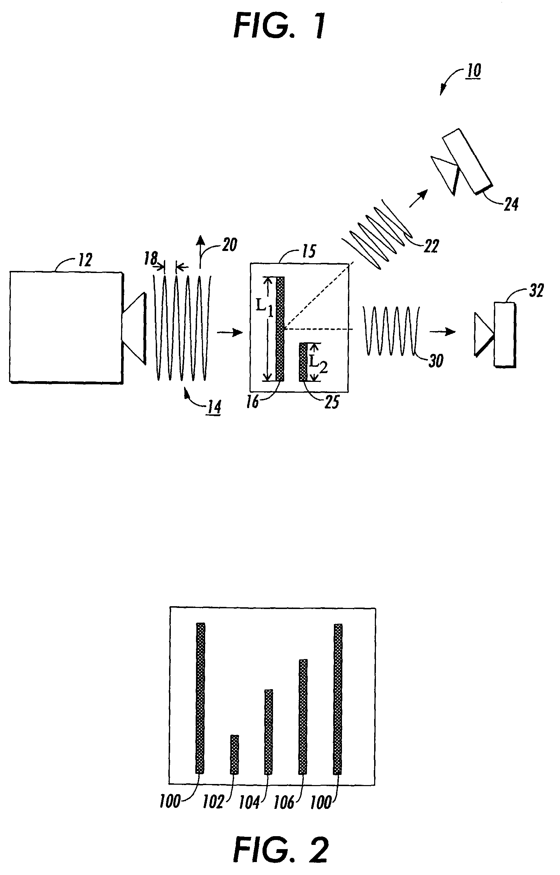

Figure 1 shows a simplified schematic rendition of a microwave barcode system 10. That system includes a microwave transmitter 12 emitting a polarized microwave signal 14 toward a substrate 15 having a microwave readable element 16. The microwave signal 14 has a wavelength 18 and is polarized such that the E-field is in the direction 20. The microwave frequencies of interest range from around 1 gigahertz to over 200 gigahertz. Currently, microwave frequencies of around 15 gigahertz are used, while operating frequencies of around 100 gigahertz are believed to be beneficial. The microwave readable element 16 is a conductive bar having a length that is one-half the wavelength 18, and an axis that is parallel to the direction 20. It is to be understood that Figure 1 is not to scale.

When the microwave signal 14 strikes the microwave readable element 16 the microwave signal is partially scattered and partially attenuated. The scattered portion 22 of the microwave signal can be sensed by a sensor 24. If the sensor 24 receives a scattered signal it determines that a microwave readable element exists. In that case the sensor 24 produces a predetermined output signal, say a one. Figure 1 also shows a conductive bar 25 that is much shorter than the microwave readable element 16. The conductive bar 25 would only slightly scatter the microwave signal 14. The sensor 24 would then produce another output signal, say a zero, based upon a missing (low scattered) signal. Of course, the conductive bar 25 might be missing altogether.

The spatial orientation of the conductive bars in Figure 1, that being vertically aligned, is not critical. Indeed, a current implementation uses conductive bars that are axially aligned horizontally, with the conductive bars being separated by small spaces.

While the foregoing discusses the use of binary information (zeros and ones), that is not the only barcode encoding scheme useful with the present invention. For example, a conductive bar of one length or orientation might represent any member of a set (such as a letter or a number). A conductive bar of another length or orientation might represent another member, and a third conductive bar of another length might represent another member, and so on. By varying the radiated microwave signal 14 by sending different wavelengths the different conductive bars can be sensed and the corresponding set members identified.

In addition, or alternatively, to using the scattered portion 22 the microwave barcode system 10 can sense an attenuated portion 30 of the microwave signal 14 using a sensor 32. If the sensor 32 receives an attenuated signal, which would occur if the microwave signal struck the microwave readable element 16, the sensor can determine that a microwave readable element exists. In that case the sensor 32 can produce a predetermined output signal, say a one. However, if the microwave signal strikes the conductive bar 25 the sensor 32 would receive a relatively large signal. In that case, the sensor 32 could produce another output signal.

With an understanding of the basic microwave readable system 10, the applicability of different microwave readable elements is self-evident. Figure 2 illustrates a set of microwave readable elements that vary in length. If only one microwave readable element is used, the presence of that element might represent one binary state while its absence might represent the other binary state. If multiple microwave readable elements are used, different lengths might represent different elements of a given set (include a space). For example, a long conductive bar 100 might represent an X, a short conductive bar 102 might represent an E, a first medium length conductive bar 104 might represent an R, and a second conductive bar 106 might represent an O. Thus, Figure 2 would be a barcode for XEROX.

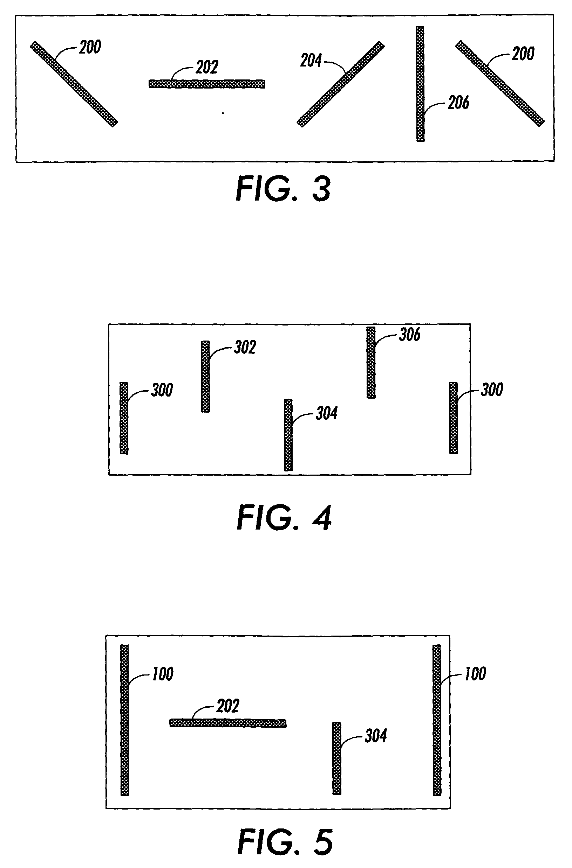

Figure 3 illustrates a set of microwave readable elements that vary in angles. This set takes advantage of the polarization characteristics of microwave energy. Again, if only one microwave readable element is used, the presence of that element might represent one binary state while its absence might represent the other binary state. If multiple microwave readable elements are used, different angles might represent different elements of a given set. For example, a left leaning conductive bar 200 might represent an X, a horizontal conductive bar 202 might represent an E, a right leaning conductive bar 204 might represent an R, and a vertical conductive bar 206 might represent an O. Thus, Figure 3 would also be a barcode for XEROX.

Many other sets of microwave readable elements are also possible. For example, Figure 4 illustrates a set of microwave readable elements that vary in vertical position relative to a horizontal line. A first conductive bar 300 at a given position might represent an X, a slightly higher conductive bar 302 might represent an E, a conductive bar 304 slightly lower than that of the conductive bar 300 might represent an R, and a conductive bar 306 higher than the conductive bar 302 might represent an O. Thus, Figure 4 would also be a barcode for XEROX.

As shown in Figure 5, the various conductive bars described above can also be combined to form a composite set. Again, Figure 5 would also be a barcode for XEROX.

It is to be understood that while the figures and the above description illustrate the present invention, they are exemplary only. Others who are skilled in the applicable arts will recognize numerous modifications and adaptations of the illustrated embodiments that remain within the principles of the present invention. Therefore, the present invention is to be limited only by the appended claims.

## Claims

1. A barcode comprising a surface having a plurality of conductive bars for resonating with an incoming polarized microwave signal.

2. A barcode according to claim 1, wherein said conductive bars are printed with a conductive ink.

3. The barcode according to claim 1, wherein the barcode represent zeroes using conductive bars of one length and ones using conductive bars of a different length.

4. The barcode according to claim 1, wherein the barcode represent one packet of information using conductive bars of one length and another packet of information using conductive bars of a different length.

5. The barcode according to claim 4, wherein said conductive bars of one length are resonant at a first microwave frequency.

6. The barcode according to claim 5, wherein said conductive bars of a different length are resonant at a second microwave frequency that is different from said first microwave frequency.

7. A barcode system, comprising:
a barcode on a substrate, said barcode comprising a plurality of conductive bars for resonating with a polarized microwave signal;
a transmitter radiating said polarized microwave signal onto said barcode; and
a sensor sensing an effect of said conductive bars on said polarized microwave signal, wherein a barcode packet of information is determined to exist when said sensor senses said effect.

8. The barcode system according to claim 7, wherein said sensed effect is attenuation of said radiated polarized microwave signal.

9. A barcode system, comprising:
a barcode on a substrate, said barcode comprising a first set of conductive bars for resonating with a first polarized microwave signal and a second set of conductive bars for resonating with a second polarized microwave signal;
a transmitter station radiating both said first polarized microwave signal onto said barcode and said second polarized microwave signal onto said barcode; and
a sensor for sensing a member of said first set of conductive bars using an effect of members of said first set of conductive bars on said first polarized microwave signal, said sensor further for sensing a member of said second set of conductive bars using an effect of members of said second set of conductive bars on said second polarized microwave signal.

10. The barcode system according to claim 9, wherein said first polarized microwave signal and said second polarized microwave signal have different wavelengths.
